# EUROPEAN PATENT APPLICATION

(11) **EP 4 328 727 A1**
(43) Date of publication of application: **28.02.2024**
(21) Application number: 23190501.9
(22) Date of filing: 09.08.2023
(51) Int. Cl.: G06F 3/0481, A63F 13/60

(54) **CONTENT MODIFICATION SYSTEM AND METHOD**

(30) Priority: 25.08.2022 GB 202212364
(71) Applicant: Sony Interactive Entertainment Inc., Tokyo 108-0075 (JP)
(72) Inventor: MAW, Ross, London, W1F 7LP (GB)
(74) Representative: D Young & Co LLP

(57) **Abstract**

A system for modifying a virtual environment to be interacted with by a user, the system comprising a location identifying unit configured to identify the locations of one or more events and the locations of one or more corresponding triggers for each of those events, a preference determining unit configured to determine one or more preferences of the user, a relation modifying unit configured to modify the temporal and/or spatial relation between respective parts of one or more pairs of corresponding events and triggers in dependence upon the determined user preferences, and a virtual environment modification unit operable to generate a modified virtual environment, the modified virtual environment comprising the modified temporal and/or spatial relations.

## Description

### BACKGROUND OF THE INVENTION

### Field of the invention

This disclosure relates to a content modification system and method.

### Description of the Prior Art

The "background" description provided herein is for the purpose of generally presenting the context of the disclosure. Work of the presently named inventors, to the extent it is described in this background section, as well as aspects of the description which may not otherwise qualify as prior art at the time of filing, are neither expressly or impliedly admitted as prior art against the present invention.

In recent years there has been a focus on increasing the immersiveness of video games and other video content; here, immersiveness refers to the level of realism that a user attributes to the experience. In some cases this can be improved by increasing the quality of graphics and/or audio associated with the content, while in others an improvement in interactions between the user and the content can contribute to the sense of immersion that the user experiences. This can be at least partially supported by improvements to hardware; increasing processing power and efficiency has enabled advances in image rendering processes, for instance, which can lead to more realistic image content.

Other advances in hardware may also contribute to a sense of immersion experienced by a user. For instance, peripherals have been developed which enable a more natural interaction with content - similarly, improvements in user tracking have made gesture-based inputs without peripherals much more accessible for many users. In addition to this, improvements to display technology enable the display of higher quality images (such as higher resolution and dynamic range) as well as more immersive display types such as head-mountable display devices (HMDs).

While an increase in the sense of immersion experienced by a user can in many cases be regarded as a benefit, there can also be issues caused by increased immersion within content. For instance, a user who is fully immersed in content may become unaware of their surroundings, which can lead to personal injury or the damaging of nearby objects. A user may also become overly invested in the content, which can magnify their reactions to events within the content - this can be particularly problematic in content such as a horror film, for example, in response to which a user may become particularly scared.

When viewing content such as horror games or other content that can be emotionally distressing, a user may seek to limit the impact of the content upon their mood. For some users, this may be simply playing with the lights on or only during the day, or playing with the sound off. Alternatively, or in addition, some content may be modified by a user (such as by installing a mod for a game) to appear less scary - such as by replacing elements within the content with alternatives that are less problematic for the user. For instance, elements with an intimidating appearance can be given a comic appearance, such as swapping guns for bananas or giving a character a silly hat. While such methods of limiting the impact of content upon the user may be effective, this can lead to a user experience that is significantly different to that which is anticipated by the creator of the content.

It is in the context of the above discussion that the present disclosure arises.

### SUMMARY OF THE INVENTION

This disclosure is defined by claim 1.

Further respective aspects and features of the disclosure are defined in the appended claims.

It is to be understood that both the foregoing general description of the invention and the following detailed description are exemplary, but are not restrictive, of the invention.

### BRIEF DESCRIPTION OF THE DRAWINGS

A more complete appreciation of the disclosure and many of the attendant advantages thereof will be readily obtained as the same becomes better understood by reference to the following detailed description when considered in connection with the accompanying drawings, wherein:
Figure 1 schematically illustrates an exemplary entertainment system;
Figure 2 schematically illustrates a map view of a portion of a virtual environment;
Figure 3 schematically illustrates a method for modifying a virtual environment; and
Figure 4 schematically illustrates a system for modifying a virtual environment.

### DESCRIPTION OF THE EMBODIMENTS

Referring now to the drawings, wherein like reference numerals designate identical or corresponding parts throughout the several views, embodiments of the present disclosure are described.

Embodiments of the present disclosure may be implemented using any suitable processing device or combination of processing devices; these include games consoles, general purpose computers, portable processing devices (such as mobile phones or portable games consoles), and remote processing systems (such as cloud gaming servers).

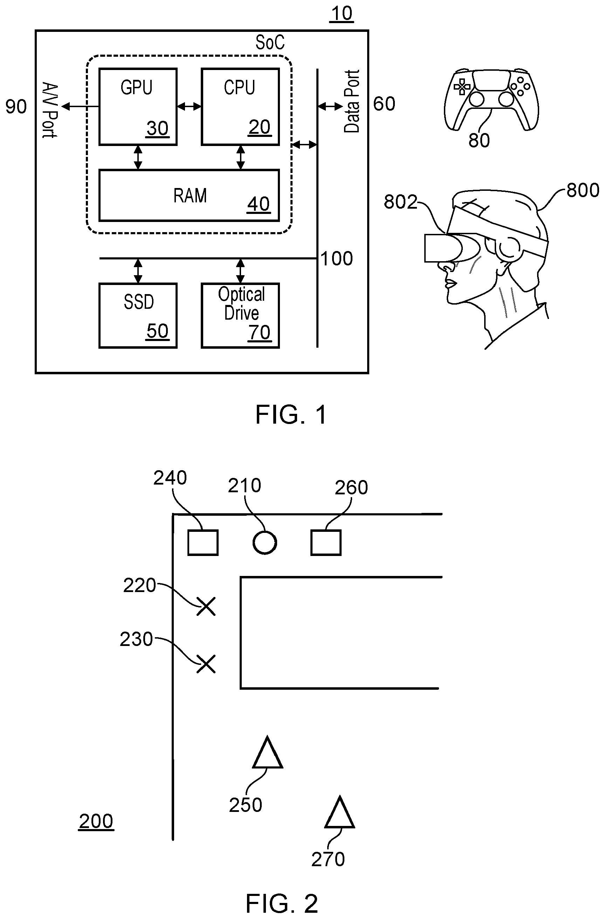

Referring to Figure 1, an example of an entertainment system 10 is a computer or console such as the Sony^{®} PlayStation 5^{®} (PS5).

The entertainment system 10 comprises a central processor 20. This may be a single or multi core processor, for example comprising eight cores as in the PS5. The entertainment system also comprises a graphical processing unit or GPU 30. The GPU can be physically separate to the CPU, or integrated with the CPU as a system on a chip (SoC) as in the PS5.

The entertainment device also comprises RAM 40, and may either have separate RAM for each of the CPU and GPU, or shared RAM as in the PS5. The or each RAM can be physically separate, or integrated as part of an SoC as in the PS5. Further storage is provided by a disk 50, either as an external or internal hard drive, or as an external solid state drive, or an internal solid state drive as in the PS5.

The entertainment device may transmit or receive data via one or more data ports 60, such as a USB port, Ethernet^{®} port, Wi-Fi^{®} port, Bluetooth^{®} port or similar, as appropriate. It may also optionally receive data via an optical drive 70.

Interaction with the system is typically provided using one or more handheld controllers 80, such as the DualSense^{®} controller in the case of the PS5.

Audio/visual outputs from the entertainment device are typically provided through one or more A/V ports 90, or through one or more of the wired or wireless data ports 60.

Where components are not integrated, they may be connected as appropriate either by a dedicated data link or via a bus 100.

An example of a device for displaying images output by the entertainment system is a head mounted display 'HMD' 95, worn by a user 1. However, the advantages associated with embodiments of the present disclosure may also be realised when using more traditional displays, such as those integrated with a processing device (such as a portable games console or mobile phone) or a television.

Embodiments of the present disclosure may provide a significant reduction in user discomfort when interacting with a system. In particular, it is recognised that dynamic elements in content may cause a user to become shocked or panicked when interacting with content - this may be particularly problematic for those with a nervous disposition, or those who are easily spooked, for example. For such users, this can lead to an uncomfortable experience. Further to this, players who are greatly affected by an event may be prone to a physical reaction - such as dropping a controller or attempting to physically run away from the event (despite the event being in the virtual environment). This can lead to unintentional damage or disconnection of hardware elements, which can be damaging and/or disruptive.

An example of such a dynamic element is that of a non-playable character (such as an enemy in a game) that jumps out at a user when they satisfy a particular trigger condition. Similar considerations may apply for audio that is triggered under similar circumstances, as a sound with a nearby apparent sound source may be very impactful upon the user.

Figure 2 schematically illustrates a map view of a portion of a virtual environment 200. In this Figure, a number of event and respective trigger locations are shown. A trigger location is considered to be a location whereby, if the user satisfies any further conditions (such as a minimum health in a game, having obtained a particular level, and/or a number of completed quests) required of the event, movement to this location causes the corresponding event to be triggered. The event may occur immediately once the trigger is activated, or once a specified amount of time has elapsed.

A first example of an event is represented by the shape 210; this event is considered to be a visible element that moves relative to the user when the trigger 220 is stepped on or otherwise activated by the user. A visible element may be an enemy in a game, for example, or any other feature that would be expected to surprise the user when they encounter it. While the element may be surprising or shocking to the user based upon its appearance (either in terms of how it looks, or because it is not expected to be found in that environment, for example), the impact upon the user is considered to be at least partly dependent upon the proximity of the event to the trigger 220.

It is therefore considered that the impact upon the user can be mitigated by modifying the temporal and/or spatial proximity of the event to the trigger.

In a first example, the proximity may be varied by changing a latency associated with the triggering of the event. For instance, instead of the event 210 occurring several seconds after activating the trigger 220, the latency may be decreased so as to cause the event to occur after a single second of the trigger activation. This would mean that the user has less time to move towards the event after activating the trigger, thereby causing the user to be further from the event when it occurs. For instance, the user experiencing the event 210 may be further from the corner (and therefore visible element) when the event occurs if the latency is reduced.

Alternatively, or in addition, the location of the trigger 220 may be changed so as to increase the distance between the trigger location and the event location. In the context of Figure 2, the trigger location 230 may be used for the trigger instead of the trigger location 220. This means that the event would be triggered while the user is further from the corner, thereby reducing the impact of the event due to increased distance between the user and the visible element at the time of the event occurring.

While discussed here as a change in the location of the trigger 220, it is of course considered that the trigger location 230 may be a new trigger that is defined to replace the original one, or an additional trigger that is selected for use by the system in response to particular user preferences or the like.

Figure 2 also shows an audio event location 240, indicating an apparent sound source location for an audio event. An audio event may be considered to be any audio output that is generated in dependence upon a user action satisfying a trigger condition. This audio event is associated with the trigger location 250.

When seeking to reduce the impact of the audio event 240, it is considered that one (or both) of a change in the audio event location 240 and trigger location 250 are able to be implemented. This can lead to the use of the audio event location 260 instead of the audio event location 240, and/or the use of the trigger location 270 instead of the audio event location 250.

When determining the location of the modified trigger/event locations, the geometry of the virtual environment may be considered in addition to the proximity. For instance, occlusions within the environment may be determined (such that the trigger location isn't moved to a location which would cause the event to be triggered when the user cannot see it, for instance) as well as the acoustic properties of the environment. In either case, such considerations may contribute to the impact of the event as experienced by the user.

While discussed above as separate events, it is of course considered that an event may comprise both visual and audible elements. In such cases, each of these components may be considered together when modifying the trigger/event relation. Alternatively, it is possible that the audible and visual elements are considered separately. For instance, the trigger location may be modified for the audio separately to that for the visual portion of the event. This can result in a sound output associated with an event preceding the visual element becoming visible, for example, or being delayed relative to it. This can mean that the user is warned of the visual element before it appears (in the first case) and/or that the impact of the event as a whole is reduced by spreading the stimulus over a longer time period.

While in some cases this may lead to a disconnect between the apparent location of the visual and audible elements, which can make the event appear unrealistic (such as a loss of synchronisation between sound and appearance for an element), this may be considered acceptable in many cases and may not be noticed in the case that the event occurs over a short period of time - this is particularly true if the user is expected to react in a manner that would cause them to be less likely to notice the lack of realism (such as focusing on an action, for instance drawing a weapon, or changing the camera view away from the visual element associated with the event).

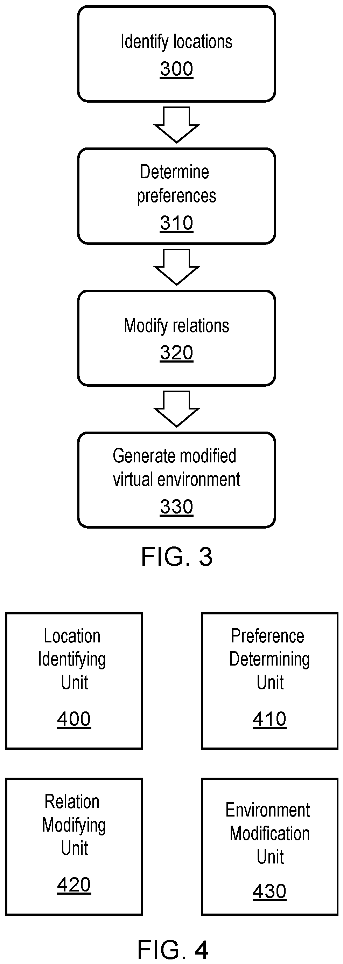

Figure 3 schematically illustrates a method for modifying a virtual environment to be interacted with by a user in accordance with one or more embodiments of the present disclosure.

A step 300 comprises identifying the locations of one or more events and the locations of one or more corresponding triggers for each of those events. This may be performed in a number of ways; for instance, a virtual environment may be examined (manually, or using a trained Al, for instance) for elements representing event and/or trigger locations. Alternatively, or in addition, files associated with a virtual environment may be examined to identify triggers and/or events - for instance, conditional statements in code that cause an event to occur in the virtual environment. In some embodiments a virtual environment may have associated metadata that indicates the locations of events and corresponding triggers; such metadata can be used as a source for identifying these locations where available.

A step 310 comprises determining one or more preferences of the user; these preferences are indicative of a user's tolerance for the impact of events, such that a user with a higher tolerance is happy to experience more impactful events than a user with a lower tolerance. These preferences may be stored in a user profile, with the preferences being indicated via a manual input by the user. For instance, the user may provide inputs indicating how reactive they are to content and/or how sensitive they are to particular events. In some cases, a user may provide information about any medical conditions that can vary how they react to particular events or their tolerance for events.

Alternatively, or in addition, a profile of the user can be populated using data gathered over a number of different user experiences. For example, the reactions of a user to events can be monitored along with a characterisation of the corresponding event to determine user preferences. These reactions may be based upon explicit feedback from the user (such as asking them to rate or provide an opinion on an event or content more generally), and/or monitored biometric feedback such as a heart rate. A user's reactions (based upon tracking of the user's motion, or that of an object associated with the user) may be also be used as an example of such data.

User preferences may further be dynamic in that they vary based upon a user state or the like. For instance, if it is detected that a user is feeling nervous or scared (based upon biometrics, user inputs, or game performance, for instance) then this may be accounted for by lowering the tolerance for the impact of events. Similarly, a user playing a game at night may be expected to have a lower tolerance than when playing during the day. The number of players of a game may also be considered, as a player who has company (physical or virtual) may be less susceptible to the impact of unexpected events. Another variable that may be considered is that of the display type used by a user to view the virtual environment - a more immersive display (such as an HMD) may be associated with a lower tolerance than a less immersive display (such as a television) for many users. These variables (and/or their impact upon the user's tolerance) may be determined based upon inputs provided by the user, or by monitoring a user over a number of gameplay sessions or the like.

A step 320 comprises modifying the temporal and/or spatial relation between respective parts of one or more pairs of corresponding events and triggers in dependence upon the determined user preferences. As discussed above with reference to Figure 2, this may include the relocation of one or both of the trigger and/or event locations within a pair. A pair here refers to a trigger and event that correspond to one another such that when the trigger is activated, the event occurs. Of course, it may be considered that multiple triggers may correspond to a single event, and multiple events may correspond to a single trigger, such that 'pair' should not be interpreted as requiring a strict one-to-one mapping between triggers and events within the virtual environment. It is also envisaged that events and triggers may be implemented using a many-to-many mapping such that a group of triggers can each be used to activate a plurality of events.

In some embodiments, these relations may be determined so as to cause the event to occur when a user is further away; this can result in visual elements being less impactful due to being further away (and therefore both less alarming and less imposing, due to occupying a smaller portion of the user's field of view), for instance, as well as audio being quieter. As described above, this may be implemented by modifying the spatial relation between the trigger and event locations and/or the temporal relation which is a measure of a delay between the trigger being activated and the event occurring (or at least becoming apparent to a user). The magnitude of this modification may be determined based upon a user's tolerance for impactful events (as determined from the user preferences), and/or a difference between the impact of an event and this threshold. For instance, the threshold may be used to determine a scaling of the impact of the event, or it may be used to determine a target level of impact for an event to have.

In some embodiments, it may be considered advantageous to determine relations between a trigger and an event in dependence upon a user's gaze direction; this may be based upon a detected gaze, for instance, or simply a field of view within the virtual environment. In either case, it may be considered advantageous to determine the relations so as to cause visual effects associated with an event to appear in a particular part of the user's field of view. The part of the user's view may be determined based upon user preferences, or based upon the visual effect itself; in some cases, it may be considered less impactful to have the event occur in the periphery of the user's field of view, while in other cases it may be less impactful upon the user if it occurs in the centre of the user's field of view.

In addition to the modification of these relations, the elements themselves may be modified. For instance, the size of visual elements may be increased or decreased and/or the volume of audio elements may be increased or decreased. Any modification may be made to visual and/or audible elements as appropriate to reduce the impact upon the user that is caused by the event. Similar modifications may also be applied to haptic feedback or the like that are associated with events.

The modification of events in this step may also be performed in dependence upon the nature of the event; for instance, 'good' events may be modified less than 'bad' events, as these would be expected to have a more positive impact upon the user and so less likely to cause discomfort. Here, 'good' events may mean those events which benefit a user or are otherwise associated with positive emotions (such as finding a gift, or being surprised by a friend) while 'bad' events may be those which would harm a user or otherwise be associated with negative emotions (such as being surprised by an enemy).

A step 330 comprises generating a modified virtual environment, the modified virtual environment comprising the modified temporal and/or spatial relations. This may comprise the generation of a new version of the virtual environment with new parameters, for example, or a direct modification of the virtual environment. This may be performed while the user is exploring the virtual environment (that is, on-the-fly) such that the virtual environment can be modified throughout a gameplay session or the like. This may be advantageous in that the virtual environment can be more responsive to the user's mental state or other conditions, thereby enabling a more reliable decrease in expected user discomfort. Alternatively, or in addition (in the case that some event/trigger pairings are modified in advance while others are not), the generation of the modified virtual environment may be performed in advance; this may be upon the launch of a game, for instance, or during the loading of the virtual environment.

The impact of an event may be quantified using any rating or scale as appropriate; for instance, a numerical scale (such as a scale running from one to ten) and/or labelled scale (such as low, medium, or high impact). Optionally one or more tags or descriptors which characterise the event (such as positive/negative events) can be provided. Such a rating can be generated based upon user feedback (for instance, during a beta testing of a game) and/or measured reactions by users who encounter particular events. The impact of an event may also (or instead) be estimated based upon characteristics of the event - such as proximity to the user, visual properties, and/or audio properties. These characteristics may be scored to generate an overall impact rating, for example.

In some embodiments, a machine learning model may be trained to estimate the impact of an event upon a user - this can be trained based upon video and/or audio of events along with information about a typical user reaction and/or a plurality of user reactions. Based upon this dataset, the model may be able to derive a correlation between particular features of an event and use this to predict the impact of events prior to them being observed by a user.

In some cases, modifications can be applied to the virtual environment can be quantified using one of these methods to determine whether the modification is sufficient to account for the user's preferences. For instance, a user's preferences may be used to determine a target impact (such as a particular numerical value or label) for one or more events, and the modified trigger/event combination can be assessed to determine whether the predicted level of impact is attained.

Figure 4 schematically illustrates a system for modifying a virtual environment to be interacted with by a user; this may be performed in accordance with any of the features described above. In particular, the modification of the virtual environment comprises a modification to one or more triggers which are associated with one or more events, and/or the events themselves. The one or more events may comprise any one or more of visual elements, audio elements, and/or haptic feedback elements, for example. The system comprises a location identifying unit 400, a preference determining unit 410, a relation modifying unit 420, and a virtual environment modification unit 430.

These functional units may be implemented using any suitable hardware, such as a games console, server, or personal computer comprising one or more processing units such as a CPU and/or GPU. In some embodiments the functionality of these units may be implemented in a distributed manner such that at least a part of the functionality of one or more units is provided at a separate physics device to that of one or more other units. For instance, a server may be used to determine the locations of events and triggers while a local device (such as a games console) may be used to generate the modification to the virtual environment.

The location identifying unit 400 is configured to identify the locations of one or more events and the locations of one or more corresponding triggers for each of those events. In some embodiments, the location identifying unit is configured to analyse the virtual environment to identify elements associated with triggers and/or events; this may be performed by examining assets associated with the virtual environment and locating them within the environment, or by examining code associated with the environment that includes information about events. Alternatively, or in addition, metadata or the like may be associated with an environment that indicates these locations and as such the locations can be identified from pre-existing data.

The preference determining unit 410 is configured to determine one or more preferences of the user. More specifically, the preference determining unit 410 may be configured to determine a user's impact tolerance for events; 'impact tolerance' here refers to the user's capacity to handle impactful events. For instance, this may be a threshold for how impactful an event is before it causes a user to become distressed or otherwise uncomfortable. Such a tolerance may be defined for a single event, or may relate to a number of events. The tolerance may also be determined in dependence upon the type of event that is experienced - for instance, a user may have a much higher tolerance for event impact when the event is a positive one than when it is a negative one.

The preference determining unit 410 may be configured to determine preferences of the user in dependence upon a user profile associated with the user, biometric analysis of the user, a mood of the user, the time of day at which the user interacts with the virtual environment, and/or whether there are other users sharing a physical and/or virtual environment with the user.

For instance, user profile may allow a user to input one or more characteristics relating to their tolerance for events. This can include indicating a sensitivity to unexpected audio or objects jumping out at them, sensitivity to positive/negative events, and/or any particular triggers (such as phobias) which cause an increase in the user's sensitivity to an event, or the like. The user profile may also contain information which is determined automatically based upon measurements of user reactions (such as biometric readings or detected motion) to events within one or more virtual environments over time.

Biometric analysis of a user can be used to determine a user response to events within content, as well as to determine a user's current physical state. This may be advantageous in that it can be determined whether a user is in a more relaxed state or not - in a more relaxed state, the user may be less responsive or sensitive to particular events than if they are in a less relaxed state. This analysis can also be used as an indicator of the user's mood, along with other information such as actions taken in the virtual environment, vocal cues, and motion cues, for instance.

As noted above, both the time of day and the presence (physical and/or virtual) of other users can have an impact on a user's tolerance for events. For example, many users would experience a greater reaction to a horror game if playing alone in the middle of the night than they would during the day with a group of friends for support. Therefore each of these may be considered when determining user preferences relating to the tolerance of a user to particular events. In some embodiments, the impact of having other users present may be dependent upon whether the presence is physical or virtual, the number of users who are present, and/or a level of support offered by a user that is present (for instance, identifying a close friend as offering more support than an acquaintance, which could be indicated explicitly by a user or derived from information about common gaming partners).

The relation modifying unit 420 is configured to modify the temporal and/or spatial relation between respective parts of one or more pairs of corresponding events and triggers in dependence upon the determined user preferences. It is considered that the relation modifying unit 420 may be configured to modify one or more properties of the event to reduce the impact of the event upon the user, in addition to varying the temporal and/or spatial relation. This modification may be implemented by changing the appearance of a visual element (such as size, colour, and/or shape), or by altering properties of an audio element (such as volume, duration, and/or pitch).

When modifying the spatial relation between an event and a corresponding trigger, it is considered that the relation modifying unit 420 is configured to increase a distance between a location associated with the trigger and a location associated with a corresponding event. Similarly, when modifying the temporal relation between an event and a corresponding trigger, it is considered that the relation modifying unit 420 is configured to increase or decrease a length of time between a trigger being activated by a user and the occurrence of a corresponding event. Either of these, or a suitable combination of the two, may be used to vary the distance between the user and the event at the time the event occurs with an increased distance being associated with a reduced impact of the event upon the user.

In some embodiments, the relation modifying unit 420 may be configured to modify the temporal and/or spatial relations in dependence upon a user's field of view within the virtual environment. For instance, if a user is looking directly at an area where a visual element would appear then the location of the event and/or trigger may be varied such that the event occurs when the user is further away so as to reduce the impact. However, if the user's field of view means that the event would occur in the periphery then this may be considered lower-impact and as such the variation that is implemented may be smaller. Of course, this may be defined on a per-user and/or per-event basis, as different users and different events may lead to different levels of sensitivity to an event based upon the user's field of view.

In some embodiments, the relation modifying unit 420 may be configured to modify the temporal and/or spatial relations in dependence upon visual or audio occlusions within the virtual environment. One example of this is to consider occlusions within the environment, which can affect the impact of an event upon the user. For instance, a small change to the location of the trigger or event can have a bigger effect upon the impact of the event if this causes it to be obscured by elements within the virtual environment.

The virtual environment modification unit 430 is configured to generate a modified virtual environment, the modified virtual environment comprising the modified temporal and/or spatial relations. In other words, the modified virtual environment may be a version of the virtual environment in which the locations of one or more events and/or triggers have been modified, and/or one or more timing characteristics associated with the triggering of an event.

The virtual environment modification unit 430 may be configured to generate the modified virtual environment prior to the user entering the virtual environment in some embodiments; alternatively, a more on-the-fly approach may be considered whereby modifications are made to the virtual environment while the user is interacting with it. The latter may be advantageous in that the modifications can be more responsive to the user's mood or the like as it changes throughout their navigation of the virtual environment, while the former can reduce the burden upon the processing device at runtime.

The system of Figure 4 may optionally comprise a head-mountable display device configured to display one or more images of the modified virtual environment to the user; however, any display device may be considered as discussed above. This includes televisions, mobile phones and games consoles, and computer monitors, for example.

The arrangement of Figure 4 is an example of a processor (for example, a GPU, and/or CPU located in a games console or any other computing device) that is operable to modify a virtual environment to be interacted with by a user, and in particular is operable to:
identify the locations of one or more events and the locations of one or more corresponding triggers for each of those events;
determine one or more preferences of the user;
modify the temporal and/or spatial relation between respective parts of one or more pairs of corresponding events and triggers in dependence upon the determined user preferences; and
generate a modified virtual environment, the modified virtual environment comprising the modified temporal and/or spatial relations.

The techniques described above may be implemented in hardware, software or combinations of the two. In the case that a software-controlled data processing apparatus is employed to implement one or more features of the embodiments, it will be appreciated that such software, and a storage or transmission medium such as a non-transitory machine-readable storage medium by which such software is provided, are also considered as embodiments of the disclosure.

Thus, the foregoing discussion discloses and describes merely exemplary embodiments of the present invention. As will be understood by those skilled in the art, the present invention may be embodied in other specific forms without departing from the spirit or essential characteristics thereof. Accordingly, the disclosure of the present invention is intended to be illustrative, but not limiting of the scope of the invention, as well as other claims. The disclosure, including any readily discernible variants of the teachings herein, defines, in part, the scope of the foregoing claim terminology such that no inventive subject matter is dedicated to the public.

## Claims

1. A system for modifying a virtual environment to be interacted with by a user, the system comprising:
a location identifying unit configured to identify the locations of one or more events and the locations of one or more corresponding triggers for each of those events;
a preference determining unit configured to determine one or more preferences of the user;
a relation modifying unit configured to modify the temporal and/or spatial relation between respective parts of one or more pairs of corresponding events and triggers in dependence upon the determined user preferences; and
a virtual environment modification unit configured to generate a modified virtual environment, the modified virtual environment comprising the modified temporal and/or spatial relations.

2. A system according to claim 1, wherein the location identifying unit is configured to analyse the virtual environment to identify elements associated with triggers and/or events.

3. A system according to any preceding claim, wherein the preference determining unit is configured to determine a user's impact tolerance for events.

4. A system according to any preceding claim, wherein the preference determining unit is configured to determine preferences of the user in dependence upon a user profile associated with the user, biometric analysis of the user, a mood of the user, the time of day at which the user interacts with the virtual environment, and/or whether there are other users sharing a physical and/or virtual environment with the user.

5. A system according to any preceding claim, wherein the relation modifying unit is configured to modify one or more properties of the event to reduce the impact of the event upon the user.

6. A system according to any preceding claim, wherein the relation modifying unit is configured to increase a distance between a location associated with the trigger and a location associated with a corresponding event.

7. A system according to any preceding claim, wherein the relation modifying unit is configured to increase or decrease a length of time between a trigger being activated by a user and the occurrence of a corresponding event.

8. A system according to any preceding claim, wherein the relation modifying unit is configured to modify the temporal and/or spatial relations in dependence upon a user's field of view within the virtual environment.

9. A system according to any preceding claim, wherein the relation modifying unit is configured to modify the temporal and/or spatial relations in dependence upon visual or audio occlusions within the virtual environment.

10. A system according to any preceding claim, wherein the one or more events comprise any one or more of visual elements, audio elements, and/or haptic feedback elements.

11. A system according to any preceding claim, wherein the virtual environment modification unit is configured to generate the modified virtual environment prior to the user entering the virtual environment.

12. A system according to any preceding claim, comprising a head-mountable display device configured to display one or more images of the modified virtual environment to the user.

13. A method for modifying a virtual environment to be interacted with by a user, the method comprising:
identifying the locations of one or more events and the locations of one or more corresponding triggers for each of those events;
determining one or more preferences of the user;
modifying the temporal and/or spatial relation between respective parts of one or more pairs of corresponding events and triggers in dependence upon the determined user preferences; and
generating a modified virtual environment, the modified virtual environment comprising the modified temporal and/or spatial relations.

14. Computer software which, when executed by a computer, causes the computer to carry out the method of claim 13.

15. A non-transitory machine-readable storage medium which stores computer software according to claim 14.
